# EUROPEAN PATENT APPLICATION

(11) **EP 2 045 789 A2**
(43) Date of publication of application: **08.04.2009**
(21) Application number: 08164289.4
(22) Date of filing: 12.09.2008
(51) Int. Cl.: G08C 17/00

(54) **Remote control apparatus and method thereof**

(30) Priority: 02.10.2007 KR 20070099252
(71) Applicant: Samsung Electronics Co., Ltd., Suwon-si, Gyeonggi-do 442-742 (KR)
(72) Inventor: Jee, Jeong-wun, Suwon-shi, Gyeonggi-do (KR)
(74) Representative: Robinson, Ian Michael

(57) **Abstract**

Provided are a two-step remote control apparatus and method thereof. The remote control apparatus (2) includes: a sensor (21) which detects whether a user touches or presses a button (62); and a control unit (22) which issues display request signal of a first button image (62) to an electronic apparatus (3) when receiving a button touch signal from the sensor (21) or issues a signal requesting a performance of an operation of the electronic apparatus (3) and corresponding to a pressed button (62) when receiving a button pressing signal from the sensor (21). According to the present invention, a user can control an image reproducing device (3) using the remote control apparatus (2) or a virtual remote control apparatus (61), and the user does not need to verify a pressing of a button (62) by looking back and forth between the image reproducing device (3) and the remote control apparatus (2) due to the display of the virtual remote control apparatus (61) on the image reproducing device (3).

## Description

### CROSS-REFERENCE TO RELATED PATENT APPLICATIONS

This application claims the priority of Korean Patent Application No. 10-2007-0099252, filed on October 2, 2007, in the Korean Intellectual Property Office, the disclosure of which is incorporated herein in its entirety by reference.

### BACKGROUND OF THE INVENTION

### 1. Field of the Invention

Apparatuses and methods consistent with the present invention relate to a two-step remote control, and more particularly, to a two-step remote control apparatus and a method of controlling image reproducing apparatus, which has an image display unit, using the two-step remote control apparatus to input a control command through the image reproducing apparatus.

### 2. Description of the Related Art

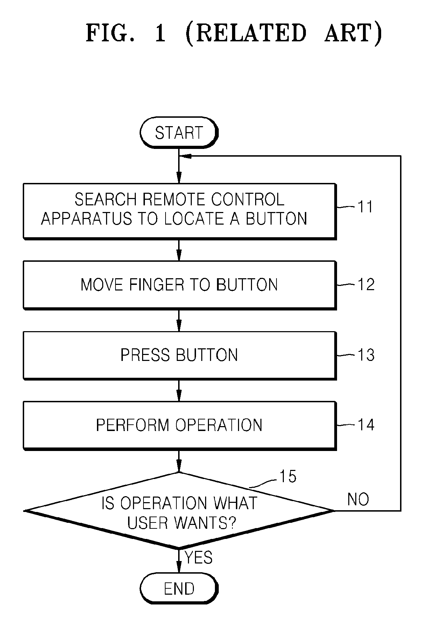

The conventional method of controlling an image reproducing apparatus using a conventional remote control apparatus will be described below with reference to FIG. 1.

FIG. 1 is a flowchart of the conventional method of controlling an image reproducing apparatus using the conventional remote control apparatus; a user is required to locate a button of the image reproducing apparatus, which corresponds to an operation (or a function) of the image reproducing apparatus, which the user wants to perform, in operation 11. Then, the user presses the button with a finger, in operations 12 and 13 and then, an operation, corresponding to the button, of the image reproducing apparatus is performed (operation 14). If the user presses the wrong button, the user needs to repeat the above procedure from operation 11 until the correct button is pressed.

When the user is using the conventional remote control apparatus, it is quite inconvenient for the user to have to find and press such small buttons on the conventional remote control apparatus. Especially when the user wants to use the conventional remote control apparatus in a not well-lit location, the user is inconvenienced by having to additionally switch on the light. Also, if the user is an elderly person or one with bad eyesight, such user needs to wear spectacles to see the buttons of the remote control apparatus that the user wants to use.

### SUMMARY OF THE INVENTION

According to the present invention there is provided an apparatus and method as set forth in the appended claims. Other features of the invention will be apparent from the dependent claims, and the description which follows.

The present invention provides a two-step remote control apparatus and a method of controlling of the two-step remote control apparatus, and thereby enabling a user to easily operate buttons of the two-step remote control apparatus.

According to an aspect of the present invention, there is provided a remote control apparatus comprising: a sensor unit which detects whether a user touches or presses a button; and a control unit which issues a display request signal of a first button image to an electronic apparatus when receiving a button touch signal from the sensor unit or issues a signal requesting a performance of an operation of the electronic apparatus and corresponding to a pressed button when receiving a button pressing signal from the sensor unit.

According to another aspect of the present invention, there is provided a method of remotely controlling an electronic apparatus with an image display unit, the method comprising: detecting a button which a user touches; firstly displaying an icon of the touched button on the image display unit of the electronic apparatus; and performing an operation of the electronic apparatus corresponding to the button when the user presses the touched button.

According to yet another aspect of the present invention, there is provided a computer readable recording medium having embodied thereon a computer program for executing a method of remotely controlling an electronic apparatus with an image display unit, the method comprising: detecting a button of the remote control apparatus, which a user touches; firstly displaying an icon of the touched button on the image display unit; and performing an operation of the electronic apparatus corresponding to the button when the user presses the touched button.

According to the present invention, a remote control apparatus allows a user to control an image reproducing device using the remote control apparatus or a virtual remote control apparatus, and thus, the user does not need to verify a pressing of a button by looking back and forth between the image reproducing device and the remote control apparatus due to the display of the virtual remote control apparatus on the image reproducing device, and thus, the usability of the remote control apparatus can be improved. Especially, this is helpful to those that have poor eyesight, such as the elderly, since such users can easily use the remote control apparatus without needing to check each button on the remote control apparatus each time a button is pressed, and if the remove control apparatus is operated in a dark environment, the remote control apparatus is also efficiently applicable.

### BRIEF DESCRIPTION OF THE DRAWINGS

The above and other features of the present invention will become more apparent by describing in detail exemplary embodiments thereof with reference to the attached drawings in which:
FIG. 1 is a flowchart of a conventional method of controlling an image reproducing apparatus using a conventional remote control apparatus;
FIG. 2 is a functional block diagram of a two-step remote control apparatus 2 according to an embodiment of the present invention;
FIG. 3 is a flowchart of a two-step remote controlling method according to an embodiment of the present invention;
FIGS. 4A, 4B, and 4C shows examples of the two-step remote controlling method, as shown in FIG. 3, which is implemented on the image display unit of the image reproducing apparatus;
FIG. 5 is a flowchart of a two-step remote controlling method according to another embodiment of the present invention; and
FIG. 6 shows examples of the two-step remote controlling method, as shown in FIG. 5, which is implemented on the image display unit of the image reproducing apparatus.

### DETAILED DESCRIPTION OF THE INVENTION

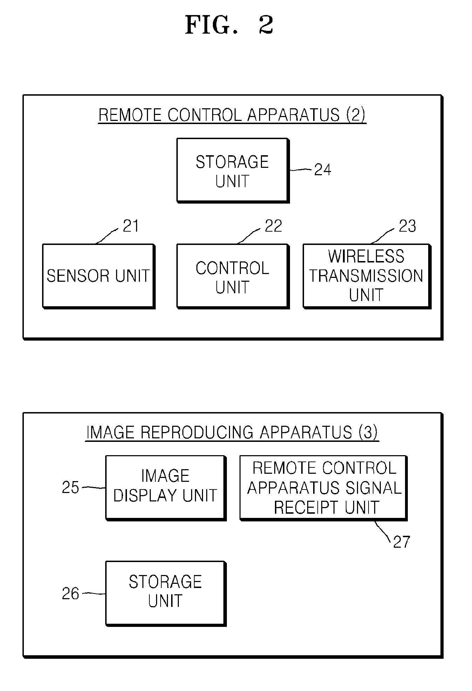

FIG. 2 is a functional block diagram of a two-step remote control apparatus 2 according to an embodiment of the present invention.

Referring to FIG. 2, the two-step remote control apparatus 2 includes a sensor unit 21, a control unit 22, a storage unit 24, and a wireless transmission unit 23.

The sensor unit 21 includes sensors to detect a button that is pressed or touched by a user. As an example of the sensors of the sensor unit 21, a glide sensor or touch sensor may be used, and generally these sensors determine whether the button is touched by detecting the changes in capacitance of the touched area.

A plurality of small sensors may be attached respectively to the buttons on the two-step remote control apparatus 2, or like according to the present embodiment in FIG. 2, the sensor unit 21, such as a touch screen, can be installed as a large sensor of the two-step remote control apparatus 2.

The storage unit 24 stores information about the locations (or coordinates) of the buttons of the two-step remote control apparatus 2. Also, the storage unit 24 stores icons (or representing images) of the buttons of the two-step remote control apparatus 2 and information of the correspondence between the buttons of the two-step remote control apparatus 2 and operations (or functions) of an image reproducing apparatus 3.

According to another embodiment of the present invention, data of the button icons of the two-step remote control apparatus 2 or the information about the correspondence between the buttons of the two-step remote control apparatus 2 and the operations of the image reproducing apparatus 3 may be stored in a storage unit 26 of the image reproducing apparatus 3.

The control unit 22, in cooperation with the storage unit 24, may transmit the data of the button icons of the two-step remote control apparatus 2, which is pressed (or touched), and information about the corresponding operation to the image reproducing apparatus 3 through the wireless transmission unit 23, when the control unit 22 receives a touch signal or a press signal from the sensor unit 21.

According to another embodiment of the present invention, the control unit 22 may transmit information only of the button (or button location) that is touched on the two-step remote control apparatus 2 to the image reproducing apparatus 3.

The wireless transmission unit 23 converts a remote control signal produced by the control unit 22 into an infrared signal to be transmitted to a remote control apparatus signal receipt unit 27 of the image reproducing apparatus 3.

It is understood that the image reproducing apparatus 3 according to the present invention can be an electronic apparatus such as a digital TV and a DVD player that can reproduce audio/video (A/V) data and also an MP3 player and a personal digital assistant (PDA) that have an image display unit.

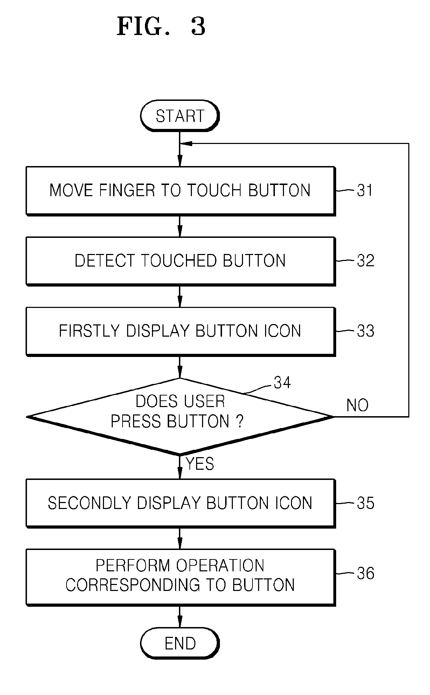

FIG. 3 is a flowchart of a two-step remote controlling method according to an embodiment of the present invention.

When the image reproducing apparatus 3 is switched on, a user touches a button of the two-step remote control apparatus 2 with their finger in order to perform a predetermined operation of the image reproducing apparatus 3 (operation 31).

The sensor unit 21 detects the touched button (or the location of the button), and then, the control unit 22 transmits the information of the detected button or data of a button icon corresponding to the touched button to the image reproducing apparatus 3 (operation 32).

The image reproducing apparatus 3 generates a first icon image based on the received information of the detected button or the data of the button icon and displays the first icon on an image display unit 25 (first display) (operation 33).

In operation 34, It the user presses the same button of the two-step remote control apparatus 2 again, when the user views the first icon displayed on the image display unit 25 and the first icon corresponds to the predetermined operation, the method proceeds to operation 35. Otherwise, the method proceeds to operation 31.

In operation 35, the shade of the first icon, displayed on the image display unit 25 and which corresponds to the predetermined operation, is changed as the same button of the two-step remote control apparatus 2 is being pressed, and, in operation 36, the predetermined operation is performed as the shade of the first icon changes. According to another embodiment of the present invention, operation 36 can precede operation 35. Alternatively, according to another embodiment of the present invention, operation 35 can be omitted.

In order to determine whether the user touches or presses a button, the difference in pressure on the button may be used as a criterion. Furthermore, the length of time for which the user puts their finger on a particular button may be used as a criterion to determine whether the user touches or presses the button.

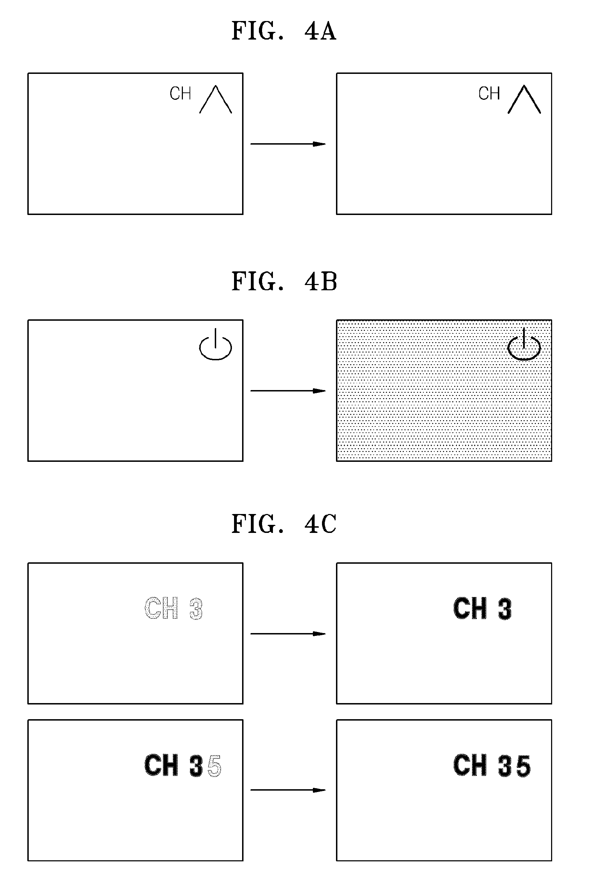

FIGS. 4A, 4B and 4C show examples of the two-step remote controlling method, as shown in FIG. 3, which is implemented on the image display unit 25 of the image reproducing apparatus 3.

Referring FIG. 4A, when the user touches or presses a channel-up button of the two-step remote controlling apparatus 2, an icon "CH" of the channel-up button is shown with a light color in the upper right part of the image display unit 25 (first display). Then, once the user presses the same channel-up button again, while the color of the icon "CH" of the button darkens as the same channel-up button is being pressed (second display), a channel of the image reproducing apparatus 3 is changed in practice.

FIG. 4B shows images on the image display unit 25 to explain the procedures of when the user operates an OFF button of the two-step remote control apparatus 2 to turn off the image reproducing apparatus 3.

FIG. 4C shows images on the image display unit 25 to explain the procedures of when the user operates buttons 3 and 5 of the two-step remote control apparatus 2 to change the channel of the image reproducing apparatus 3 to channel "35".

To distinguish the first icon from the second icon, the shade of the color of the first and second icons is changed as the button is being pressed. To this end, alternatively, the colors of the icons can be different from each other, or the icons can be displayed at different positions.

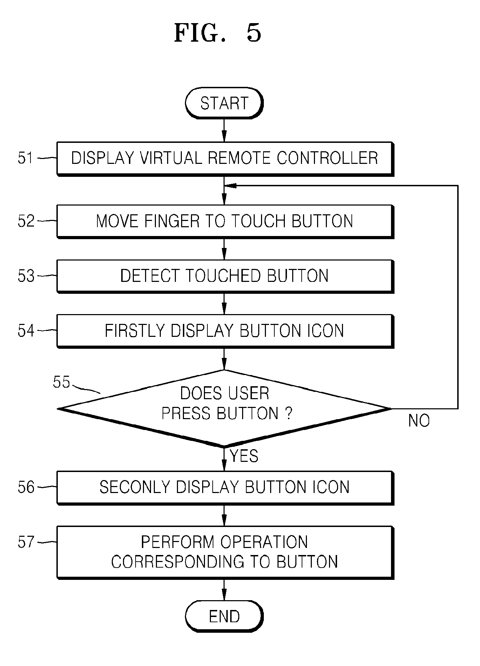

FIG. 5 is a flowchart of a two-step remote controlling method according to another embodiment of the present invention.

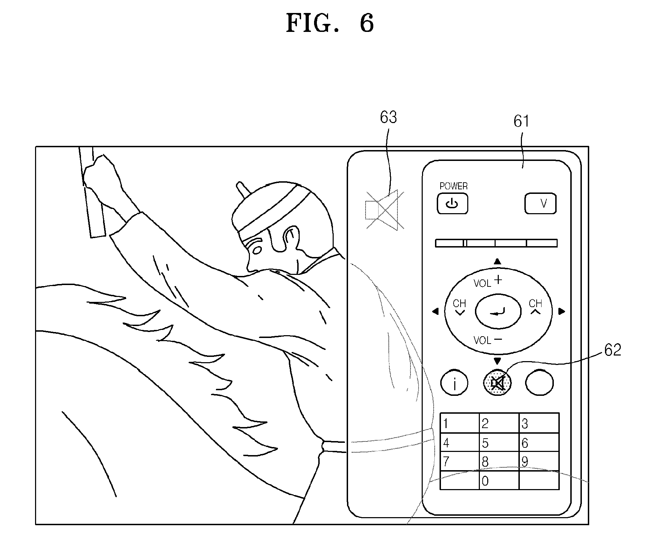

When the user wants to use the two-step remote control apparatus 2, a virtual remote controller 61, which corresponds to the two-step remote control apparatus 2, (in FIG. 6) is displayed on the image display unit 25 (operation 51). The virtual remote controller 61 (or an image of the remote control apparatus) may be displayed semi-transparently on a part of the image display unit 25 to not interrupt a user view of a reproduced image being reproduced on the image display unit 25.

Once the user touches a button (for example, a MUTE button) of the two-step remote control apparatus 2 while the user is viewing the virtual remote controller 61 on the part of the image display unit 25, a corresponding virtual button 62 on the virtual remote controller 61 is highlighted to be distinguished from other virtual buttons of the virtual remote controller 61 (first display) (operation 54).

If the user wants to perform the mute operation, the user must press the button of the two-step remote control apparatus 2 again.

Then, an additional icon 63 for mute appears on another part of the image display unit 25, which is separate from the display part of the image display unit 25, as the button of the two-step remote control apparatus 2 is pressed again (second display) (operation 56).

In FIG. 5, operations 52, 53, 55, and 57 are the same as operations 31, 32, 34, and 35 in FIG. 3, respectively.

According to another embodiment of the present invention, in operation 56, the second displayed image can be displayed by differently highlighting the button image 62 already highlighted in operation 54 instead of displaying the additional icon 63, in operation 56.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, and optical data storage devices. Other storage devices may include carrier waves (such as data transmission through the Internet). The computer readable recording medium can also be distributed over network coupled computer systems so that the computer readable code is stored and executed in a distributed fashion.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A remote control apparatus (2), comprising:
a sensor unit (21) which detects whether a user touches a button or presses the button; and
a control unit (22) which generates a display request signal of a first button image (62) to an electronic apparatus (3) if a button touch signal is received from the sensor unit (21) or generates a signal requesting a performance of an operation of the electronic apparatus (3) and corresponding to the pressed button if a button pressing signal is received from the sensor unit (21).

2. The remote control apparatus (2) of claim 1, wherein the control unit (22) issues a display request signal of a second button image (63) to the electronic apparatus (3), if the control unit (22) receives the button pressing signal from the sensor unit (21), wherein the display request signal of the second button image (63) is different from the display request signal of the first button image (62).

3. The remote control apparatus (2) of claim 2, wherein the first button image (62) and the second button image (63) are different in at least one of color shade, colors, and display positions.

4. The remote control apparatus (2) of claim 1, 2 or 3, wherein the sensor unit (21) includes a touch sensor.

5. A method of remotely controlling an electronic apparatus (3) having an image display unit (25), the method comprising:
detecting a button which a user touches;
firstly displaying an first icon (62) of the touched button on the image display unit (25) of the electronic apparatus (3); and
performing an operation of the electronic apparatus (3) corresponding to the touched button if the user presses the touched button.

6. The method of claim 5, further comprising:
determining whether the user presses the touched button.

7. The method of claim 6, further comprising:
secondly displaying a second icon (63) of the pressed button differently from the first icon (62) if the user presses the touched button.

8. The method of claim 7, wherein the first icon (62) and the second icon (63) are different in colour shade and/or different in color.

9. The method of claim 7, wherein the first icon (62) and the second icon (63) are different in respective locations of the icons (62, 63).

10. The method of claim 6, wherein if the user does not press the touched button again, the detecting of the button which the user touches is repeated.

11. The method of claim 5, further comprising:
displaying a virtual remote controller (61) in the image display unit (25).

12. The method of claim 11, wherein a button (62) of the virtual remote controller (61), which the user touches, is displayed differently from other buttons of the virtual remote controller (61).

13. The method of claim 12, further comprising:
secondly displaying the button (62) differently if the user then presses the touched button for a second time.

14. The method of claim 17, wherein the first displaying of the touched button (62) and the second displaying of the pressed button (63) are different in shade of color, color and/or display position.

15. A computer readable recording medium having embodied thereon a computer program for executing the method of any of claims 5 to 14.
